# EUROPEAN PATENT SPECIFICATION

(11) **EP 2 496 494 B1**
(45) Date of publication and mention of the grant of the patent: **21.06.2017**
(21) Application number: 10778549.5
(22) Date of filing: 27.10.2010
(51) Int. Cl.: B65D 77/20

(54) **PEEL-OFF PACKAGING SYSTEM FOR FRESH FOODSTUFFS**
ABZIEHBARER DECKEL FÜR EINE LEBENSMITTEL-VERPACKUNG
SYSTEME D'EMBALLAGE PELABLE POUR ALIMENTS FRAIS

(30) Priority: 06.11.2009 FR 0905334
(43) Date of publication of application: 12.09.2012
(73) Proprietor: Amcor Flexibles Sélestat SAS, 92052 Paris la Défense CEDEX (FR)
(72) Inventor: BOIRON, Guy, F-68920 Wintzenheim (FR); DUFOUR, Patrick, F-67210 Obernai (FR); RICK, Jean-Luc, F-67550 Vendenheim (FR); GRAYER, Alain, F-67230 Witternheim (FR)
(74) Representative: Gernet, Samuel Andreas
(86) International application number: PCT/EP2010/006571
(87) International publication number: WO 2011/054470

(56) References cited:
- EP-A1- 0 262 652
- WO-A1-2006/016038
- US-A- 5 342 684

## Description

The invention relates to the field of lids designed to seal containers. It concerns more particularly lids which take the form of peel-off lids designed to seal containers, typically pots or bottles, which contain fluid products such as fresh dairy products or other food products with a limited shelf life, requiring neither pasteurization nor sterilization.

Generally, foodstuffs with a limited shelf life like non-sterilized or non-pasteurized dairy products, for example fresh milk products, are poured into containers (pots, or bottles) typically made of glass or plastic. These containers are then covered with a lid which is made either from a metalloplastic sheet including a layer of aluminum alloy, or from a composite sheet comprising paper and plastic (typically PET: polyethylene terephthalate), and which is heat-sealed onto a zone of the container which surrounds the upper edge of the cavity of the container, that we will thereafter refer to as the "ring-shape sealing zone". These lids adhere to the container with enough force to ensure leak tightness, in particular against steam, but sufficiently weakly to allow them to be separated from said ring-shaped sealing zone by peeling. As this invention lends itself particularly well to containers provided with a collar (or neck) surrounding a dispensing opening, we will also indicate said ring-shaped sealing zone by the term "mouth", which usually indicates the upper edge of the neck which surrounds said dispensing opening.

Typical rates of filling for such pots or containers for non-pasteurized or non-sterilized dairy products and other foodstuffs with a limited shelf life are typically about 30 containers per minute. Moreover, said containers can be filled and sealed simultaneously, so that the same machine, able to function for example with 24 tracks, is typically able to supply 40,000 pots per hour. It is clear that, for such rates, the conditions of positioning and heat sealing of the lid on the container are of paramount influence on the quality of the leak-tightness of the containers sealed in this way. The sealing product used may be either a sealing sheet which is placed on several containers at the same time before carrying out the simultaneous heat sealing of said containers, or a customized lid that is placed on the opening of one container alone.

Patent application WO2006/016038 describes the structure of a sealing product, whether a customized lid or a sealing sheet, which comprises:
▪ a support structure, which may include a layer of aluminum alloy, or a layer of paper, or a plastic layer having sufficient mechanical characteristics, typically PET (polyethylene terephthalate);
▪ a multi-layer structure, typically co-extruded, including, on one of its faces, an adhesive layer including an adhesive material chosen so as to adhere to said support layer, and, on its other face, a sealing layer including a sealing material chosen so as to adhere, after heat sealing, to the ring-shaped sealing zone.

In particular for customized lids, which are generally precut in the form of discs whose diameter is greater than that of the dispensing opening, the problem arises of placing said lids above the ring-shaped sealing zone with a high degree of accuracy. A badly positioned lid is likely, after heat sealing, not to adhere perfectly to the entire circumference of the ring-shaped sealing zone, so that the container cannot be sure to provide proper conservation of the product which it contains. It is all the more important to solve the problem in that production rates are high, that the positioning of the lid and controlling said positioning must be made in a fraction of a second and that, by the time that it is realized that a slight positioning defect has occurred, a very large number of rejects may have resulted.

The solution proposed up until now involved precutting the lid to a diameter significantly higher than the external diameter of the container mouth and folding back the "overlapping" part along the cylindrical wall outside the collar or neck. Only a metalloplastic structure could be appropriate for such a solution. Its aluminum support layer, of a minimum thickness of 30 micrometers, made it possible to permanently fold back said overlapping edge by crimping around the neck of the container, without damaging the sealed zone. On the other hand, a non-metalloplastic structure had the disadvantage of not being able to be crimped onto the neck, so that it was necessary either to accept unattractive overlapping lids, unreliable because they were likely to be inopportunely torn off during handling of the containers, or to precut lids of smaller diameter and to thus run the risk of having many badly sealed containers

But the metalloplastic structure used to solve this problem had disadvantages:
- it is not easy to recycle;
- as it contains a large amount of aluminum, its cost is relatively high, and its carbon footprint is high so that it is not in line with current concerns relating to sustainable development;
- it has a metallic appearance, difficult or expensive to modify (lacquering, printing, etc.);
- it has a low crack strength which may be observed in particular during the transportation of sealed containers: because of the vibrations occurring during transport, the aluminum alloy layer may be subjected to strong forces and is therefore likely to present cracking which no longer guarantees the desired sealing.

The purpose of the invention is to procure sealing products, in the form of sealing sheets or precut lids, which, while not having the above-mentioned disadvantages of the lids which have a metallo-plastic structure, allow sealing at high rates which is satisfactory from the standpoint of both the leak-tightness of the products sealed and that of appearance and reliability. Another object of the invention is to provide lids that are economical to manufacture and that comply with current directives for packaging materials concerning their respect for the environment.

According to the invention, the sealing product has the features of claim 1.

The sealing product according to the invention is either a customized stamped lid, or a sheet or rather a plaque including several stamped cavities. It is made from a sealing sheet of which the structure comprises several layers of plastic and at least one support layer of paper or, more generally, a material mainly comprising vegetable fibers.

The material of the support layer is inexpensive and withstands better than a plastic the thermal shock caused by the heat sealing tool, with which it is directly in contact. The thermal shock is all the greater as this material, a poor heat conductor, requires the heat sealing tool to be brought up to a temperature higher than that used for heat sealing lids with a metalloplastic structure used in prior art. This is what is meant by "mainly includes vegetable fibers": it may contain other fibers, synthetic organic fibers for example, but it must be able to withstand the temperatures and the pressure imposed by the heat sealing tool during heat sealing, which can exceed 210-230 °C. This material includes at least 80% of vegetable fibers.

But such a material is poorly suited to stamping because it tears very easily. It is very important to be able to center the lid in relation to the ring-shaped sealing zone and this problem can easily be solved, without calling upon the use of sophisticated display and positioning tools, by creating a relief whose base is, at least intermittently, close to the interior of the cavity designed to contain the food product, which cavity is itself bordered by said ring- shaped sealing zone, so that the relief must have a base whose contour is close to that of the internal edge of said ring-shaped sealing zone. It can be deduced from the latter for example
by designing a "parallel" contour, also called offset contour. It may also, while being inside the contour of the internal edge of the ring-shaped sealing zone, include only some suitably placed zones in the vicinity of said contour. Said zones are suitably placed in the meaning that, once the lid is placed on the upper edge of the container with said relief inserted into the container cavity and the base thereof being in contact - at least at some points - with the internal wall of the container at the level of its open end, the said lid cannot easily move in relation to said open end of the container.

Naturally, to limit the risks of tearing, the fibrous material is selected from materials comprising long fibers, such as paper commonly called "kraft paper", and having good elongation at rupture characteristics for a paper, greater than 5%, whatever the direction of the test is (length direction, width direction). This requires the use of a nonstandard paper because, in general, and as the example below shows, the elongation at rupture in the length direction - also called the machine direction - of a standard paper is lower. Additionally, the base of the stamped cavity is advantageously toroid in shape with a fillet radius typically greater than 5 times the total thickness of the sealing sheet. Also, advantageously, the tilted wall of the relief does not have too abrupt a slope in relation to the plans of the sealing sheet. Typically, one should aim for a tilted wall of less than 45° in relation to said plane.

Said support layer has an average thickness which, expressed in terms of mass per surface unit, i.e. in terms of "surface density", also called "basic weight" or "grammage", lies between 40 and 110 g/m². Preferably, a layer having a thickness close to 70 g/m² will be chosen.

The sealing product according to the invention includes a multi-layer structure, typically co-extruded, with an adhesive material chosen so as to adhere, by one of its faces, to said support layer, and a sealing material chosen so as to adhere, by its other face, to the ring- shaped sealing zone during said heat sealing. This multi-layer structure also comprises, preferably adjacent to the adhesive layer made up of a binder having an affinity for the support layer, an intermediate layer made of plastic with a high strength and able to undergo plastic deformation, the thickness of which is such that it endows the entire sealing product with sufficient malleability and resistance for it to be possible to stamp it to the desired form without tearing. This intermediate layer makes it possible to peel off the lid without defibering
or tearing. Expressed in terms of surface density, the average thickness of said intermediate layer is greater than a tenth of the average thickness of the support layer, and preferably greater than a fifth of the average thickness of the support layer. Preferably, the strength is greater than 60 MPa, and preferably still greater than 80 MPa. The high malleability of the material advantageously results in an elongation at rupture greater than 5%, and preferably greater than 10%.

Said material belongs to the group of polyamides and thermoplastic polyesters. Of the polyamides, polyamide 6 turns out to be particularly suitable because it endows the sealing sheet with very good tearing strength, even at low thicknesses. Of the thermoplastic polyesters (saturated polyesters), a PET (polyethylene terephthalate) should preferably be chosen, cooled quickly (in order to give an amorphous structure or one with a low rate of crystallinity) and not bi-axially oriented.

The layer of adhesive contains a binder including at least one of the following compounds: grafted copolymers and/or copolymers and/or terpolymers including acid groups or ionomers, maleic-anhydride grafted PE metallocene, maleic-anhydride grafted linear PE, EVA copolymers, EMA copolymers, EEA copolymers, EBA copolymers. Said support layer may have an average thickness which, expressed in terms of surface density, lies between 3 and 15 g/m² and preferably in the region of 5 g/m².

Said sealing layer may, depending on the material of the container onto which said lid must be sealed, contain at least one of the following compounds: ethylene vinyl acetate copolymer (EVA), ethylene-methyl acrylate copolymer (EMA), ethylene-butyl acrylate copolymer (EBA), ethylene-ethyl acrylate copolymer (EEA), the functionalized terpolymers including acid groups or esters, acid copolymers of type EAA (ethylene-acrylic acid), EMA (ethylene-methyl acrylate), terpolymers including maleic anhydride. Said sealing layer may include at least one of said compounds and, optionally, a tackifying resin. Said sealing layer may have an average thickness which, translated into terms of surface density, lies between 3 and 20 g/m² and preferably in the region of 10 g/m². Said sealing layer may also include a mineral or organic load, for example talc, with a content by weight ranging typically from 5% to 30%, so as to encourage the cohesive rupture of said sealing layer when opening said packaging.

Said intermediate layer may have an average thickness ranging between 3 and 20 g/m², preferably in the vicinity of 15 g/m² for a support layer with an average thickness close to 70 g/m². Said multi-layer structure, typically obtained by co-extrusion, may have an average thickness ranging between 12 and 65 g/m², preferably in the vicinity of 35 g/m² for a support layer with an average thickness close to 70 g/m².

The container may be made of glass, metal or plastic, single or multi-layer or spiral. The plastic(s) is (are) chosen from saturated polystyrenes (SP), polyesters (for example PET), polyolefins, in particular polyethylene (PE) or polypropylene (PP), and polyvinyl chlorides (PVC).

Figures 1 to 3 schematically illustrate an example of an embodiment of the invention.
Figure 1 represents the structure of the sealing sheet from which the lid of figure 2 was cut out and stamped. Figure 2a is a vertical cross section of a lid according to the invention.
Figure 2b is a top view of the same lid. Figures 2a and 2b illustrate an example of a lid with specific dimensions, which should not be taken as limiting the scope of the patent. Figure 3 shows how the lid of figure 2 fits onto the open end of a cylindrical jar.

### EXAMPLE OF EMBODIMENTS

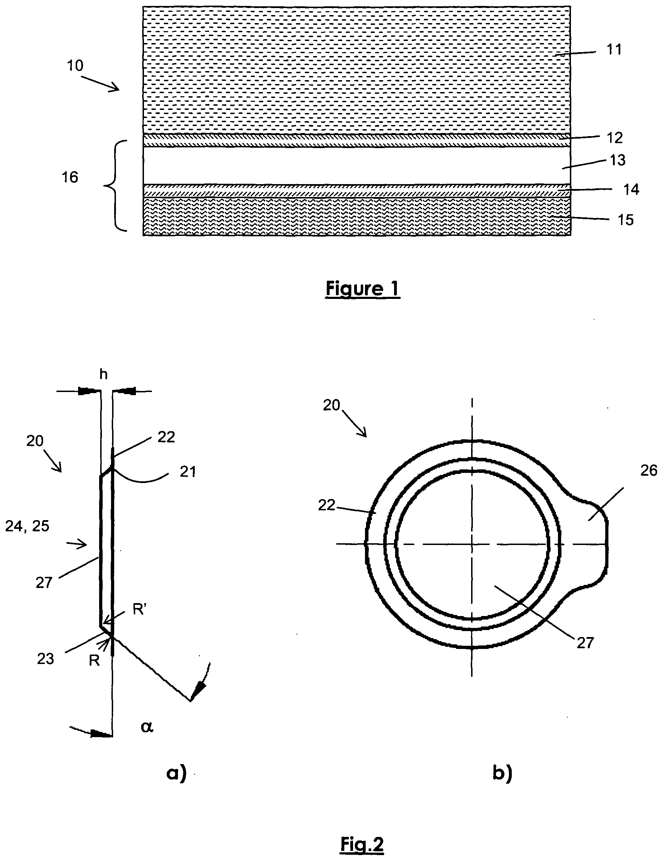

Lids (1) were made by cutting from a sealing sheet, the structure of which is shown schematically in figure 1. The lids were stamped in order to obtain the shape represented in Figure 2a.

The sealing sheet has a structure (10) which includes a support layer (11) made of paper and, adjacent to this, a multi-layer structure (16) made of plastic.

The paper used to make the support layer (11) is a paper with long fibers with a weight per square meter, i.e. a surface density, of 70 g/m². This paper has large quantities of long fibers which endow it with improved mechanical characteristics as compared to a standard paper of the same surface density. In the table below, it can be seen that the paper chosen within the context of the invention has mechanical properties that are less anisotropic than standard paper of the same weight per square meter, a much better tearing strength, and in particular a particularly good elongation at rupture in the length direction (MD), as compared to standard paper, and it is this last property which appears as best characterizing the quality of the special paper which is required to make up the support layer of the sealing product according to the invention:

| Standard paper | Paper used within the context of the invention |
|---|---|
| Force at rupture (kN/m) | Force at rupture (kN/m) |
| MD 6.4 | MD 5.6 |
| CD 3.4 | CD 4.0 |
| Elongation at rupture (%) | Elongation at rupture (%) |
| MD 1.8 | MD 5.5 |
| CD 8.4 | CD 9.0 |
| Tearing strength (mN) | Tearing strength (mN) |
| MD 525 | MD 950 |
| CD 490 | CD 1050 |
| MD (machine direction) = length direction; CD = (cross direction) width direction | |

The multi-layer structure (16) comprises:
▪ a layer (12) of binder, made of functionalized terpolymer containing acid groups and esters, binding the support layer and the intermediate layer, of average thickness 5 g/m² ;
▪ an intermediate layer (13) of polyamide 6 (PA6), of average thickness 15 g/m²;
▪ a layer (14) of binder, made of a material identical to that of layer 12, binding the intermediate layer and the sealing layer; of average thickness 5 g/m² ;
▪ a sealing layer (15) made of modified PE, including mineral loads, of average thickness 10 g/m².

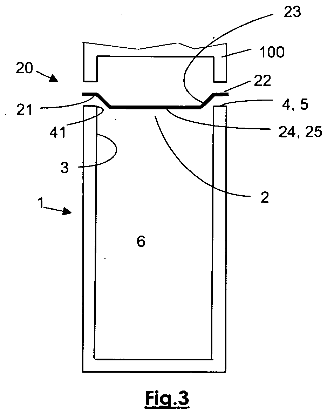

Thanks to its stamped shape, as illustrated in figure 2a, the lid (20) can be easily centered in relation to the ring-shaped sealing zone (4) of the container (1) which it is designed to cover, without it being necessary to call upon sophisticated display and positioning tools. Figure 3 shows how the lid (20) fits onto the open end (2) of a cylindrical jar (1): the base (21) of the stamped relief (24) follows - here over the entire circumference - a contour close to that of the inner edge (41) of the ring-shaped sealing zone (4), which corresponds here to the mouth (5). The contour of the inner edge (41) corresponds to the inside (3) of the cavity (6) designed to contain the foodstuff. The peripheral edge (22) of the lid, is the not stamped part of the lid which remains in the plane of the sealing sheet. It is placed above the mouth (5) then held up against this during heat sealing by means of the heat sealing tool (100).

For an external diameter (not including the tab) of around 34 mm, the stamped central part (27) has a depth (h) of approximately 2 mm in relation to the peripheral edge (22). The base (21) of the stamped cavity (25), a transition zone between the cavity (25) and said peripheral edge (22), advantageously toroid in shape with a fillet radius (R) of 0.5 mm. The tilted wall (23) of the cavity (25) is tilted at an angle α, here around 50°, in relation to said plane of the sealing sheet. The transition zone between the tilted wall (23) and the stamped central part (27) is also toroid in shape with a fillet radius (R') close to R.

The lid (20) was cut out from the sealing sheet according to a shape such that it also has a gripping tab (26), making it possible to grip the tab to detach the lid by peeling off.

Lids of identical general shape but not stamped were also manufactured and heat -sealed onto the same containers, made by molding in high density polyethylene (HD PE). These lids had the following structures:
A) a metalloplastic structure: aluminum layer (30 g/m2)/co-extruded multi-layer (30 g/m2)
B) a paper /co-extruded multi-layer structure, in which
   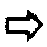 the paper is the standard paper whose mechanical properties were presented above 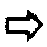
   the extruded multi-layer has the following structure:
      *a*. a layer of binder, made of functionalized terpolymer containing acid groups and esters, binding the support layer and the intermediate layer, of average thickness 5 g/m²;
      *b.* an intermediate layer (13) of low density polyethylene, of average thickness 15 g/m²;
      *c.* a layer of binder, made from a material identical to that of layer a) average thickness 5 g/m²
      *d.* a sealing layer made of modified PE, including mineral loads, of average thickness 10 g/m².

Comparative peelability tests were carried out and led to the following observations:
Type A lids: Easy peeling, cohesive opening without tearing of material;
Type B lids: Peeling impossible because the material tears;
Lids of the example according to the invention: Easy peeling, cohesive opening without tearing of material.

It is observed that the material of the intermediate layer, a PA6 in this case, endows the paper / plastic complex according to the invention with tear-proof qualities as good as the metalloplastic structure, without the disadvantage of being expensive and difficult to recycle. Additionally, a metalloplastic structure (of type A) could also be stamped but this would require a thicker layer of aluminum (at least 40 µm) and would consequently increase the disadvantages referred to above.

In addition, lids of identical general shape were produced by cutting out from several sealing sheets (I, J, K, L, M) whose globally identical structures differ only by the thickness of the intermediate layer (13) made of polyamide 6:
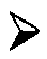 a paper support layer (11) identical to that described previously: paper with long fibers, of weight per square meter 70 g/m², with the slightly anisotropic mechanical characteristics indicated above:

| | | | |
|---|---|---|---|
| .1 | force at rupture | MD: 5.6 kN/m; | CD: 4.0 kN/m; |
| .2 | elongation at break | MD: 5.5 %; | CD: 9.0 % |

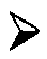 a layer (12) of binder, made of functionalized terpolymer containing acid groups and esters, binding the support layer and the intermediate layer, of average thickness 5 g/m² ;
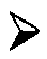 an intermediate layer (13) made of polyamide 6 (PA6), of average thickness 5 g/m² (structure I); 7 g/m² (structure J); 10 g/m² (structure K); 15 g/m² (structure L); 20 g/m²(structure M) respectively;
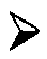 a layer (14) of binder, made of a material identical to that of layer 12, binding the intermediate layer and the sealing layer; of average thickness 5 g/m² ;
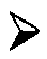 a sealing layer (15) made of modified PE, including mineral loads, of average thickness 10 g/m².

After cutting, 20 lids from each structure were stamped with the same stamping tool, giving the form described above. After stamping, the following observation was made:

| Structure | I | J | K | L | M |
|---|---|---|---|---|---|
| Thickness of intermediate layer (13): | 5g/m² | 7 g/m² | 10 g/m² | 15 g/m² | 20 g/m² |
| Ratio | | | | | |
| intermediate laver (13) thickness support layer (11) thickness | 7% | 10% | 14% | 21% | 29 % |
| Number of lids with folds and/or tears | 19 | 2 | 1 | 0 | 0 |

It can be noted that structure I does not make it possible to obtain lids without folds and tears after stamping. The results are clearly better as of structure J, i.e. as soon as the thickness of the intermediate layer PA 6 reaches one-tenth of the average thickness of the paper support layer. The results are excellent with structures that have an intermediate layer of thickness greater than, or equal to 15 g/m².

## Claims

1. Sealing product (20), designed to be sealed on at least one ring-shaped sealing zone (4) which surrounds the opening (2) of a container (1), made from a sealing sheet comprising:
a) a support layer (11);
b) a typically co-extruded multi-layer structure (16), comprising
i. on one of its faces, an adhesive layer (12) including an adhesive material chosen so as to adhere to said support layer,
ii. an intermediate layer (13) made of plastic, and
iii. on its other face, a sealing layer (15) including a sealing material chosen so as to adhere, after heat sealing, to the ring-shaped sealing zone,
**characterized in that**:
c) said support layer (11) is a fibrous material comprising at least 80% of vegetable fibers, has an average thickness expressed in terms of surface density of between 40 and 110 g/m² and has an elongation at rupture of at least 5% in whatever test direction;
d) said intermediate layer (13) is made of a plastic belonging to the group of polyamides and thermoplastic polyesters with good strength, able to undergo plastic deformation, the average thickness of the intermediate layer (13) is greater than a tenth of the average thickness of the support layer (11) when said average thicknesses are expressed in terms of surface density such that it endows the entire sealing product with sufficient malleability and resistance for it to be possible to stamp it without tearing so as to make a relief (24) whose form is such that its base (21) follows, at least discontinuously, a contour close to that of the internal edge (41) of said ring-shaped sealing zone.

2. Sealing product according to claim 1, **characterized in that** said intermediate layer is made of plastic having a strength greater than 60 MPa, preferably greater than 80 MPa.

3. Sealing product according to claim 1 or 2, **characterized in that** said intermediate layer is made of plastic having an elongation at rupture greater than 5%, preferably greater than 10 %.

4. Sealing product according to claim 1 in which said intermediate layer is made of polyamide 6 (PA6).

5. Sealing product according to claim 1 in which said intermediate layer is of polyethylene terephthalate (PET) not bi-axially oriented.

6. Sealing product according to claim 5 in which said polyethylene terephthalate (PET) has been suddenly cooled in order to give an amorphous or slightly crystallized structure.

7. Sealing product according to any of claims 1 to 6, **characterized in that** the average thickness of said intermediate layer is greater than a fifth of the average thickness of said support layer when said average thicknesses are expressed in terms of surface density.

8. Sealing product according to any of claims 1 to 7, in which said support layer (11) has an average thickness, expressed in terms of surface density, close to 70 g/m².

9. Sealing product according to any of claims 1 to 8, in which said intermediate layer (13) has an average thickness ranging between 3 and 20 g/m², and preferably in the vicinity of 15 g/m² for a support layer having an average thickness close to 70 g/m².

10. Sealing product according to any of claims 1 to 9, in which said sealing layer (15) has an average thickness which, expressed in terms of surface density, ranges between 3 and 20 g/m², and preferably in the vicinity of 10 g/m².

11. Sealing product according to any of claims 1 to 10, in which the base (21) of the relief (24) is toroid in shape with a fillet radius typically greater than 5 times the total thickness of the sealing sheet.

12. Sealing product according to any of claims 1 to 11, in which the tilted wall (23) of relief (24) is tilted by less than 45° in relation to the plane of the sealing sheet.

13. Sealing product according to any of claims 1 to 12, **characterized in that** it also comprises a gripping tab (26).

## Patentansprüche

1. Versiegelungsprodukt (20), das dazu konstruiert ist, auf zumindest eine ringförmige Siegelfläche (4) gesiegelt zu werden, die die Öffnung (2) eines Behälters (1) umgibt, und aus einer Siegelfolie hergestellt ist, wobei das Produkt umfasst:
a) eine Trägerschicht (11);
b) eine in der Regel koextrudierte mehrlagige Struktur (16), umfassend:
i. auf einer ihrer Seiten eine Klebstoffschicht (12), die ein Klebstoffmaterial umfasst, das so ausgewählt ist, dass es an der Trägerschicht haftet,
ii. eine Zwischenschicht (13) aus Kunststoff, und
iii. auf ihrer anderen Seite eine Siegelschicht (15)aus einem Siegelmaterial, das so ausgewählt ist, dass sie nach dem Heisssiegeln an der ringförmigen Siegelfläche haftet,
**dadurch gekennzeichnet, dass**:
c) die Trägerschicht (11) aus einem Fasermaterial besteht enthaltend wenigstens 80% Pflanzenfasern, eine mittlere Dicke ausgedrückt als Oberflächendichte von zwischen 40 und 110 g/m² aufweist und eine Bruchdehnung von zumindest 5% in jeder Prüfrichtung aufweist;
d) wobei die Zwischenschicht (13) aus einem Kunststoff hergestellt ist, der zu der Gruppe der Polyamide und thermoplastischen Polyester mit guter Festigkeit gehört, die plastisch verformbar sind, die mittlere Dicke der Zwischenschicht (13) größer als ein Zehntel der mittleren Dicke der Trägerschicht (11) ist, wenn die mittleren Dicken als Oberflächendichten ausgedrückt werden, so dass sie dem gesamten Versiegelungsprodukt eine ausreichende Formbarkeit und Widerstandsfähigkeit verleiht, damit es ohne Reißen geprägt werden kann, um ein Relief (24) zu bilden, dessen Form derart ist, dass seine Basis (21) wenigstens diskontinuierlich einer Kontur folgt, die nahe jener der Innenkante (41) der ringförmigen Siegelfläche verläuft.

2. Versiegelungsprodukt nach Anspruch 1, **dadurch gekennzeichnet, dass** die Zwischenschicht aus Kunststoff mit einer Festigkeit größer als 60 MPa, vorzugsweise größer als 80 MPa hergestellt ist.

3. Versiegelungsprodukt nach Anspruch 1 oder 2, **dadurch gekennzeichnet, dass** die Zwischenschicht aus Kunststoff mit einer Bruchdehnung größer als 5 %, vorzugsweise größer als 10 % hergestellt ist.

4. Versiegelungsprodukt nach Anspruch 1, wobei die Zwischenschicht aus Polyamid 6 (PA6) hergestellt ist.

5. Versiegelungsprodukt nach Anspruch 1, wobei die Zwischenschicht aus nicht biaxial gerecktem Polyethylenterephthalat (PET) hergestellt ist.

6. Versiegelungsprodukt nach Anspruch 5, wobei das Polyethylenterephthalat (PET) schockabgekühlt wurde, um ihm eine amorphe oder leicht kristallisierte Struktur zu verleihen.

7. Versiegelungsprodukt nach einem der Ansprüche 1 bis 6, **dadurch gekennzeichnet, dass** die mittlere Dicke der Zwischenschicht größer als ein Fünftel der mittleren Dicke der Trägerschicht ist, wenn die mittleren Dicken als Oberflächendichte ausgedrückt werden.

8. Versiegelungsprodukt nach einem der Ansprüche 1 bis 7, wobei die Trägerschicht (11) eine mittlere Dicke ausgedrückt als Oberflächendichte von ungefähr 70 g/m² aufweist.

9. Versiegelungsprodukt nach einem der Ansprüche 1 bis 8, wobei die Zwischenschicht (13) eine mittlere Dicke im Bereich zwischen 3 und 20 g/m², und vorzugsweise ungefähr 15 g/m² aufweist, für eine Trägerschicht mit einer mittleren Dicke von ungefähr 70 g/m².

10. Versiegelungsprodukt nach einem der Ansprüche 1 bis 9, wobei die Siegelschicht (15) eine mittlere Dicke aufweist, die, ausgedrückt als Oberflächendichte, in dem Bereich zwischen 3 und 20 g/m², und vorzugsweise nahe bei 10 g/m² liegt.

11. Versiegelungsprodukt nach einem der Ansprüche 1 bis 10, wobei die Basis (21) des Reliefs (24) toroidförmig ist, mit einem Rundungsradius, der in der Regel größer als 5 mal die Gesamtdicke der Siegelfolie ist.

12. Versiegelungsprodukt nach einem der Ansprüche 1 bis 11, wobei die schräggestellte Wand (23) des Reliefs (24) um weniger als 45° in Bezug auf die Ebene der Siegelfolie schräg gestellt ist.

13. Versiegelungsprodukt nach einem der Ansprüche 1 bis 12, **dadurch gekennzeichnet, dass** es auch eine Grifflasche (26) umfasst.

## Revendications

1. Produit de scellement (20), mis au point pour être scellé sur au moins une zone de scellement en forme d'anneau (4) qui entoure l'ouverture (2) d'un récipient (1), fabriqué à partir d'une feuille de scellement comprenant :
a) une couche de support (11) ;
b) une structure multicouche typiquement co-extrudée (16), comprenant
i. sur une de ses faces, une couche adhésive (12) comprenant un matériau adhésif choisi afin d'adhérer à ladite couche de support,
ii. une couche intermédiaire (13) constituée de matière plastique, et
iii. sur son autre face, une couche de scellement (15) comprenant un matériau de scellement choisi afin d'adhérer, après thermoscellement, à la zone de scellement en forme d'anneau,
**caractérisé en ce que** :
c) ladite couche de support (11) est un matériau fibreux comprenant au moins 80 % de fibres végétales, présente une épaisseur moyenne exprimée en terme de densité de surface de 40 à 110 g/m² et présente un allongement à la rupture d'au moins 5 % dans une direction de test quelconque ;
d) ladite couche intermédiaire (13) est constituée d'une matière plastique appartenant au groupe de polyamides et de polyesters thermoplastiques avec une bonne résistance, apte à être soumise à une déformation plastique, l'épaisseur moyenne de la couche intermédiaire (13) est supérieure à un dixième de l'épaisseur moyenne de la couche de support (11) lorsque lesdites épaisseurs moyennes sont exprimées en termes de densité de surface de sorte qu'elle munit le produit de scellement entier d'une malléabilité et d'une résistance suffisantes pour qu'il soit possible de le poinçonner sans déchirement afin de fabriquer un relief (24) dont une forme est telle que sa base (21) suit, au moins de manière discontinue, un contour proche de celui du bord interne (41) de ladite zone de scellement en forme d'anneau.

2. Produit de scellement selon la revendication 1, **caractérisé en ce que** ladite couche intermédiaire est constituée de matière plastique présentant une résistance supérieure à 60 MPa, de préférence supérieure à 80 MPa.

3. Produit de scellement selon la revendication 1 ou 2, **caractérisé en ce que** ladite couche intermédiaire est constituée de matière plastique présentant un allongement à la rupture supérieur à 5 %, de préférence supérieur à 10 %.

4. Produit de scellement selon la revendication 1, dans lequel ladite couche intermédiaire est constituée de polyamide 6 (PA6).

5. Produit de scellement selon la revendication 1, dans lequel ladite couche intermédiaire est en poly(éthylène téréphthalate) (PET) non bi-axialement orienté.

6. Produit de scellement selon la revendication 5, dans lequel ledit poly(éthylène téréphthalate) (PET) a été brusquement refroidi afin de fournir une structure amorphe ou légèrement cristallisée.

7. Produit de scellement selon l'une quelconque des revendications 1 à 6, **caractérisé en ce que** l'épaisseur moyenne de ladite couche intermédiaire est supérieure à un cinquième de l'épaisseur moyenne de ladite couche de support lorsque lesdites épaisseurs moyennes sont exprimées en termes de densité de surface.

8. Produit de scellement selon l'une quelconque des revendications 1 à 7, dans lequel ladite couche de support (11) présente une épaisseur moyenne, exprimée en termes de densité de surface, proche de 70 g/m².

9. Produit de scellement selon l'une quelconque des revendications 1 à 8, dans lequel ladite couche intermédiaire (13) présente une épaisseur moyenne de 3 à 20 g/m², et de préférence au voisinage de 15 g/m² pour une couche de support présentant une épaisseur moyenne proche de 70 g/m².

10. Produit de scellement selon l'une quelconque des revendications 1 à 9, dans lequel ladite couche de scellement (15) présente une épaisseur moyenne qui, exprimée en termes de densité de surface, est de 3 à 20 g/m², et de préférence au voisinage de 10 g/m².

11. Produit de scellement selon l'une quelconque des revendications 1 à 10, dans lequel la base (21) du relief (24) est de forme toroïdale avec un congé de raccordement typiquement supérieur à 5 fois l'épaisseur totale de la feuille de scellement.

12. Produit de scellement selon l'une quelconque des revendications 1 à 11, dans lequel la paroi inclinée (23) de relief (24) est inclinée de moins de 45° par rapport au plan de la feuille de scellement.

13. Produit de scellement selon l'une quelconque des revendications 1 à 12, **caractérisé en ce qu'**il comprend également une languette de saisie (26).
